# EUROPÄISCHE PATENTSCHRIFT

(11) **EP 1 074 033 B1**
(45) Veröffentlichungstag und Bekanntmachung des Hinweises auf die Patenterteilung: **10.07.2002**
(21) Anmeldenummer: 99927680.1
(22) Anmeldetag: 19.04.1999
(51) Int. Cl.: H01H 39/00

(54) **VORRICHTUNG ZUM AUFTRENNEN EINES ELEKTRISCHEN STROMKREISES, INSBESONDERE FÜR HOHE STROMSTÄRKEN**
DEVICE FOR ISOLATING AN ELECTRIC CIRCUIT, ESPECIALLY FOR HIGH CURRENT INTENSITIES
DISPOSITIF PERMETTANT D'ISOLER UN CIRCUIT ELECTRIQUE, NOTAMMENT EN CAS DE FORT AMPERAGE

(30) Priorität: 19.04.1998 DE 19817133
(43) Veröffentlichungstag der Anmeldung: 07.02.2001
(73) Patentinhaber: TRW Automotive Electronics & Components GmbH & Co. KG, 78315 Radolfzell (DE); Lell, Peter, Dr., 85368 Moosburg (DE)
(72) Erfinder: LELL, Peter, D-85368 Moosburg (DE)
(74) Vertreter: Eder, Eugen, Dipl.-Ing.
(86) Internationale Anmeldenummer: DE9901168
(87) Internationale Veröffentlichungsnummer: WO9954904

(56) Entgegenhaltungen:
- EP-A- 0 725 412
- DE-A- 4 413 847
- DE-B- 1 064 613
- DE-C- 4 438 157
- DE-U- 8 027 885
- DE-U- 29 614 976
- DE-U- 29 700 594

## Beschreibung

Die Erfindung betrifft eine Vorrichtung zum Auftrennen eines elektrischen Stromkreises, insbesondere für hohe Stromstärken, entsprechend dem Oberbegriff der Ansprüche 1 und 13, wie z.B. aus der DE-A-4 413 847 bekannt.

Für die verschiedensten Anwendungen sind Schalter oder ganz allgemein Vorrichtungen erforderlich, die einen elektrischen Stromkreis, insbesondere im Schadensfall oder anderen Notfällen schnell und sicher irreversibel auftrennen, um eine Beschädigung von technischen Einrichtungen oder eine Gefährdung von Personen zu verhindern. Derartige Vorrichtungen sind insbesondere dann erforderlich, wenn in technischen Einrichtungen hohe Stromstärken auftreten, beispielsweise in Energieverteilernetzen oder in der KFZ-Technik. An solche Vorrichtungen zum Auftrennen eines Stromkreises sind hohe Sicherheitsanforderungen zu stellen; Insbesondere muss der Stromkreis ausreichend schnell und sicher dauerhaft aufgetrennt werden, ohne dass durch den Schaltvorgang selbst eine Schädigung von technischen Einrichtungen oder Personen erfolgen kann. Zudem müssen solche Einrichtungen möglichst wartungsfrei sein und auch nach langer betätigungsloser Zeit, beispielsweise noch nach bis zu 20 Jahren, zuverlässig die Funktion ausüben können.

In der KFZ-Technik ist es erforderlich bzw. wünschenswert, möglichst kurzfristig nach einem Unfall die Autobatterie definiert und irreversibel von der Bordverkabelung zu trennen. Auf diese Weise lassen sich durch Funken und Plasma gebildete Zündquellen vermeiden, die entstehen, wenn beispielsweise Kabelisolationen durch während des Unfalls eindringendes Karosserieblech aufgescheuert werden oder lose Kabelenden gegeneinander oder gegen Blechteile schwingen. und die auslaufendes Benzin entzünden oder sich nach dem Unfall bildende zündfähige Benzin-Luft-Gemische zur Explosion bringen können.

Zur Realisierung einer Vorrichtung zum Auftrennen eines Stromkreises, in dem hohe Ströme fließen, ist aus der DE 297 00 594 U 1 ein elektrischer Sicherheitsschalter bekannt, bei dem ein in einem Gehäuse angeordneter Leiter mittels eines pyrotechnisch beschleunigten, elektrisch isolierenden Trennkörpers aufgetrennt wird. Der Trennkörper befindet sich in der Ausgangsstellung in einem bestimmten Abstand zu dem zu durchtrennenden Leiterelement und wird nach dem Auslösen einer in einer Brennkammer vorgesehenen Treibladung, beispielsweise infolge eines Signals, das auch zur Auslösung eines Airbags dient, in Richtung auf das Leiterelement beschleunigt. Durch eine Einkerbung des im übrigen einen relativ großen Querschnitt aufweisenden Leiterelements wird erreicht, dass das Leiterelement bzw. dieser Trennbereich sehr schnell bricht. Unterhalb des zu durchtrennenden Leiterelements ist ein Raum vorgesehen, in den hinein die durchtrennten Leiterenden umgebogen werden und der auch den Trennkörper aufnimmt. Bei dieser Vorrichtung werden somit keine Leiterenden unkontrolliert abgesprengt und abgeworfen. Fließt bei einer derartigen Vorrichtung jedoch ein hoher Strom im Leiterelement, bildet sich ein Lichtbogen, sobald im Leiterelement eine Unterbrechung auftritt, so dass der Strom zunächst praktisch in voller Höhe weiter fließt. Der Lichtbogen wird dann jedoch durch das elektrisch isolierende Trennelement extrem schnell gelöscht.

Hierdurch wird zwar eine schnelle irreversible Abschaltung des von der Batterie zu den Verbrauchern fließenden Stroms bzw. eines Kurzschlussstroms erreicht, jedoch entstehen durch die in der Last des Stromkreises immer vorhandenen Induktivitäten durch Selbstinduktion sehr hohe Spannungsspitzen, wodurch die Gefahr besteht, dass angeschlossene Geräte und Isolationen irreversibel beschädigt werden.

Des Weiteren ist aus der DE 44 38 157 C1 eine pyrotechnische Trennvorrichtung bekannt, die ebenfalls nach demselben Prinzip arbeitet. Auch hier wird ein isolierendes Trennelement mit einer Treibladung beschleunigt und schert ein zu trennendes Element ab. Hierzu ist das Trennelement vorzugsweise mit einer stimseitig ausgebildeten konkaven Ausnehmung versehen, so dass im Randbereich eine umlaufende Schneidkante gebildet wird. Mit dieser Vorrichtung soll ein sicheres und möglichst schnelles Trennen auch dickerer Leiterelemente mit einer Treibladung relativ geringer Stärke gewährleistet werden. Wird eine solche Trennvorrichtung als elektrischer Schalter verwendet, so ergibt sich jedoch wieder das Problem hoher Induktionsspannungen infolge der sehr schnellen Unterbrechung des fließenden Stroms.

Zudem benötigen die bekannten Vorrichtungen zur ausreichenden Beschleunigung des Trennelements Treibladungen, die trotz eines entsprechend massiv ausgebildeten Gehäuses ein gewisses Gefahrenpotential darstellen. Die bekannten Vorrichtungen müssen aufwendige Zulassungsprüfungen bestehen, was einen nicht zu unterschätzenden Zeitaufwand und finanziellen Aufwand mit sich bringt.

Anders aufgebaute Vorrichtungen zur Trennung von Kraftströmen, wie sie aus der Starkstromtechnik bekannt sind, werden hier nicht betrachtet, weil sie entweder relaisartig aufgebaut sind und damit die geforderte Zuverlässigkeit (auch nach 20 Jahren ohne einzige Schaltung und ohne Wartung noch sicher zu funktionieren) bei den in einem KFZ vorkommenden mechanischen und thermisch/klimatischen Umweltbedingungen nicht im Ansatz erreichen. Zudem sind derartige Vorrichtungen für einen Einsatz in der KFZ-Technik, auch bei entsprechend einfacher Ausführung, immer noch um Größenordnungen zu teuer und/oder zu schwer oder zu groß.

Der Erfindung liegt ausgehend von dem eingangs genannten Stand der Technik die Aufgabe zugrunde, eine Vorrichtung zum Auftrennen eines elektrischen Stromkreises, insbesondere für hohe Stromstärken, zu schaffen, welche einerseits den zu unterbrechenden Stromkreis sicher und ausreichend schnell irreversibel auftrennt und welche andererseits eine Beschädigung von im Stromkreis befindlichen Baugruppen durch induzierte Spannungsspitzen vermeidet.

Die Erfindung löst diese Aufgabe mit den Merkmalen des Patentanspruchs 1.

Die Erfindung geht zunächst von der Erkenntnis aus, dass hinsichtlich der Geschwindigkeit des Vorgangs, mit der eine Unterbrechung des im aufzutrennenden Stromkreis fließenden Stroms erfolgt, ein akzeptabler Kompromiss gefunden werden soll, der einerseits eine ausreichend schnelle Unterbrechung des Stroms gewährleistet, um eine Gefährdung von Einrichtungen und Personen durch den (ggf. unzulässig hohen) Strom zu vermeiden, und andererseits den Strom nicht so schnell unterbricht, dass eine Gefährdung von Einrichtungen und Personen durch induzierte Spannungsspitzen erfolgen kann; d.h. die Stromänderungen di(t)/dt dürfen betragsmäßig nicht zu groß werden.

Nach der Erfindung wird, anders als bei bekannten Vorrichtungen, nicht ein bereits vor dem Auftreffen auf das Leiterelement bzw. den Trennbereich des Leiterelements auf eine hohe Geschwindigkeit von beispielsweise 150 bis 200 m/s beschleunigtes Trennelement verwendet wird, welches das Leiterelement extrem schnell auftrennt und den ggf. entstehenden Lichtbogen löscht. Anstelle dessen wird der Trennbereich unmittelbar oder über einen bereits in der Ausgangsstellung auf dem Trennbereich aufliegenden Treibspiegel mit einem Auslösedruck beaufschlagt. Selbstverständlich kann der Treibspiegel in der Ausgangsstellung auch in einem so geringen Abstand vom Trennbereich angeordnet sein, dass dieser beim Auftreffen nur eine relativ geringe Geschwindigkeit von einigen Metern oder einigen zehn Metern pro Sekunde aufweist.

Hierdurch wird der Trennbereich nach dem Erzeugen des Auslösedrucks ausreichend schnell und doch nicht so schnell aufgetrennt, dass inakzeptabel hohe Induktionsspannungen entstehen. Da kein Beschleunigungsweg für ein zu beschleunigendes Trennelement erforderlich ist, können sehr kleine Baugrößen realisiert werden. Beispielsweise können solche Vorrichtungen direkt an der Batterieklemme einer Autobatterie angebracht werden.

Nach der Erfindung kann in einer Alternative durch die Druckbeaufschlagung des Trennbereichs der gesamte Leiterquerschnitt im Trennbereich aufgetrennt werden. In einer anderen Alternative kann nur ein Teil des Leiterquerschnitts im Trennbereich aufgetrennt werden, wodurch mit dem restlichen noch Notfunktionen von Verbrauchern, insbesondere in KFZ, für eine vorbestimmte Zeit aufrechterhalten werden können. Der verbleibende Leiterquerschnitt wird hierzu so dimensioniert, dass der über den Leiterquerschnitt fließende Strom ausreicht, um den im Querschnitt reduzierten Trennbereich entsprechend einer Schmelzsicherung zu erhitzen und anschließend vollständig aufzutrennen. Der Leiterquerschnitt über die Länge des Trennbereichs und die Länge des Trennbereichs können so bemessen sein, dass der Widerstand des reduzierten Trennbereichs ausreicht um den Strom über das Leiterelement auf einen so geringen Wert zu Reduzieren, dass eine Gefährdung von Einrichtungen und Personen ausgeschlossen ist und dennoch die Notstromversorgung der Verbraucher für die vorbestimmte Zeit bis zum Schmelzen des Trennbereichs aufrecht erhalten werden kann. Zusätzlich kann das Material des reduzierten Trennbereichs so gewählt sein, dass dieser einen vorbestimmten Widerstandswert annimmt.

Gemäß der Erfindung ist im Gehäuse eine zumindest teilweise mit einem aktivierbaren, nach seiner Aktivierung Wärmeenergie abgebenden und/oder Gas erzeugenden Medium, vorzugsweise einem pyrotechnischen Material oder einem Gas mit innerer oder chemischer Energie, gefüllte Kammer vorgesehen ist, wobei durch Aktivieren des Mediums der den Trennbereich unmittelbar oder über den Treibspiegel beaufschlagende Auslösedruck erzeugbar ist.

Der Trennvorgang kann dabei durch die richtige Wahl der pyrotechnischen Mischung und der Abbrand bzw. Verhalten - unterstützt durch das entsprechende Ausbilden des Querschnitts des Trennbereichs - so gesteuert werden, dass die Stromabschaltung einschließlich des Löschens des sich bei hohen Stromstärken ausbildenden (Plasma-)Lichtbogens mit einer solchen Geschwindigkeit erfolgt, dass die sonst zerstörerisch wirkende Induktionsenergie "verbraucht" werden kann.

In einer Ausführungsform der Vorrichtung nach der Erfindung kann zur Aktivierung des Mediums ein Anzünd- oder Zündstück vorgesehen sein. Hierdurch wird wie bei bekannten Vorrichtungen erreicht, dass das Medium sehr schnell aktiviert wird und das Medium seinerseits den Auslösedruck sehr schnell aufbaut.

In einer anderen Ausführungsform wird zur Aktivierung des Mediums ein durch elektrischen Strom beheizbarer Leiter oder ein durch einen sehr hohen elektrischen Strom zur Explosion bringbarer Leiter vorgesehen ist. Insbesondere durch die Verwendung eines lediglich beheizbaren Leiters, beispielsweise eines Glühdrahtes ergibt sich der Vorteil einer äußerst einfachen Konstruktion und Aktivierung des Mediums.

Nach einer weiteren Ausführungsform der Erfindung kann das aktivierbare Medium mittels eines der Kammer zuführbaren Heißgases aktivierbar sein, wobei das Heißgas vorzugsweise aus einer weiteren Vorrichtung zum Auftrennen eines elektrischen Stromkreises zuführbar ist. Hierdurch kann insbesondere erreicht werden, dass zwangsweise bei einer Aktivierung einer ersten Vorrichtung zum Aufrennen eines ersten Stromkreises auch eine zweite oder mehrere weitere Vorrichtungen zum Auftrennen eines zweiten oder mehrerer weiterer Stromkreise aktiviert werden. An diese Stelle sei bemerkt, dass selbstverständlich in einem einzigen gemeinsamen Gehäuse auch mehrere aufzutrennende Leiterelemente mit zugeordneten aktivierbaren Mitteln für das Auftrennen des jeweiligen Leiterelements vorgesehen sein können.

Gemäß der Erfindung ist das aktivierbare Medium durch thermische Energie aktivierbar, die vom Leiterelement, insbesondere dem Trennbereich, abgegeben wird, falls die Temperatur des Leiterelements oder des Trennbereichs einen vorbestimmten Wert überschreitet, wobei das Medium vorzugsweise in gutem Wärmekontakt mit dem Leiterelement und/oder dem Trennbereich steht. Hierdurch wird erreicht, dass eine Aktivierung der Vorrichtung auch dann gewährleistet werden kann, wenn keine mittels eines Signals ansteuerbare Aktivierungseinrichtung, beispielsweise in Form eines Glühdrahts oder eines Anzünd- oder Zündstücks, vorgesehen ist oder wenn eine vorhandene ansteuerbare Aktivierungseinrichtung funktionsunfähig ist oder kein Ansteuersignal mehr erzeugt werden kann.

In einer Ausführungsform der Erfindung ist ein topfförmig ausgebildeter Treibspiegel oder ein einen topfförmigen Bereich aufweisender Treibspiegel vorgesehen, wobei der Treibspiegel mit der Stirnseite der Außenwandung den Trennbereich beaufschlagt. Der Treibspiegel fungiert dabei als Stempel. Der Trennbereich ist vorzugsweise so ausgebildet, dass außerhalb des Bereichs, in dem der Treibspiegel mit der Stirnseite der Außenwandung den Trennbereich beaufschlagt, eine Schwächung des Trennbereichs gegenüber dem dem Trennbereich benachbarten Querschnitt des Leiterelements vorgesehen ist.

Der stempelartige Treibspiegel drückt bzw. bricht nach einer Aktivierung der Vorrichtung entweder ein Teilstück des Trennbereichs heraus, das den gesamten Querschnitt des Trennbereichs auftrennt oder nur einen entsprechenden Teil. Im letztgenannten Fall verläuft die Schwächung des Trennbereichs vorzugsweise in Form einer geschlossenen oder nur einer nach einer Seite des Trennbereichs offenen Kurve, so dass entweder ein Durchbruch in den Trennbereich "gestanzt" wird oder eine nach einer Seite des Trennbereichs hin offene Ausnehmung.

Selbstverständlich kann das Ausbrechen von Teilstücken derart ausgebildeter Trennbereiche nicht nur durch die Verwendung eines Treibspiegels, sondern auch bei einer direkten Druckbeaufschlagung des Trennbereichs erfolgen.

In allen Fällen kann der Trennbereich auch so ausgebildet sein, dass nicht ein ganzes oder mehrere Teilstücke herausgebrochen werden, sondern der Trennbereich in einem oder mehreren bestimmten Bereichen aufgebrochen wird, wobei in jedem Fall zumindest eine Reduzierung des Leiterquerschnitts erfolgt. Für das Aufbrechen kann der Trennbereich so ausgebildet sein, dass er in einem Bereich entlang von schwächenden Linien aufreißt und Teilbereiche lappenartig umgebogen werden.

In einer weiteren Ausführungsform der Erfindung ist der Innenraum des topfförmigen Treibspiegels oder des topfförmigen Bereichs zumindest teilweise mit einem thermisch aktivierbaren, nach seiner Aktivierung Wärmeenergie abgebenden und/oder Gas erzeugenden Medium gefüllt ist, vorzugsweise einem pyrotechnischen Material oder einem Gas mit innerer oder chemischer Energie, wobei das Medium in gutem Wärmekontakt mit dem Leiterelement und/oder dem Trennbereich steht.

In einer anderen Ausführungsform besteht der Trennbereich zumindest teilweise aus einem gegenüber dem übrigen Leiterelement schlechter leitenden Material. Hierdurch kann zum einen erreicht werden, dass sich dieser Bereich gegenüber dem übrigen Leiter stärker erwärmt. In den Ausführungsformen, in denen eine selbsttätige Aktivierung des Wänneenergie und/oder Gas erzeugenden Mediums bei einem unzulässig hohen Strömen durch die im Leiterelement bzw. im Trennbereich erzeugte Wärmeenergie gewünscht ist, kann auf diese Weise erreicht werden, dass ein Medium mit einer relativ hohen Aktivierungstemperatur verwendet werden kann und dennoch eine Auslösung der Vorrichtung bei relativ geringen Strömen bzw. geringen Leitertemperaturen gewünscht ist. Zum anderen kann durch die Verwendung eines schlechter leitenden Materials im Trennbereich die Funktion einer Schmelzsicherung erreicht werden, insbesondere bei Ausführungsformen, bei denen nach einer Aktivierung das Leiterelement nicht vollständig unterbrochen wird. In solchen Fällen kann der nach einem Aktivieren noch wirksame Leiterquerschnitt zumindest teilweise aus dem schlechter leitenden Material bestehen.

In einer weiteren Ausführungsform ist an der mit Druck beaufschlagbaren Oberfläche des Trennbereichs eine die Kammer oder den Innenraum des topfförmigen Treibspiegels abdichtende flexible Membran vorgesehen. Wie bei einem Treibspiegel wird hierdurch gewährleistet, dass bei einer Beaufschlagung des Trennbereichs mit Druck nicht zunächst geringe Durchbrüche im Trennbereich entstehen und sich der Druck über diese Durchbrüche abbaut, ohne das gewünschte vollständige oder teilweise Auftrennen des Trennbereichs zu bewirken.

Der Treibspiegel kann bei einer weiteren Ausführungsform aus einem Memomaterial bestehen, wobei sich der Treibspiegel bei Überschreiten einer Schwelltemperatur (Aktivierung) in eine gespeicherte Form begibt, die in der Richtung quer zum Leiterelement eine größere Ausdehnung aufweist als die Form des Treibspiegels in der Ausgangsstellung bei einer Temperatur kleiner als die Schwelltemperatur, wobei sich der Treibspiegel mit einem Ende an einem bezüglich des Gehäuses ortsfesten Anschlag abstützt und so bei einer Aktivierung den Trennbereich mit Druck beaufschlagt und zumindest teilweise auftrennt.

Bei Ausführungsformen der Erfindung, bei denen durch Druckbeaufschlagung zumindest ein Teilbereich des Trennbereichs ausbrechbar ist, ist im Gehäuse vorzugsweise ein Auffangraum zur Aufnahme des ausgebrochenen Teilbereichs vorgesehen. Der Auffangraum stellt sicher, dass nach einer Aktivierung der Vorrichtung Einrichtungen oder Personen nicht durch Bruchstücke des Trennbereichs gefährdet werden.

Der Auffangraum kann in seiner Geometrie so ausgebildet sein oder es können im Auffangraum Mittel vorgesehen sein, um nach dem druckbeaufschlagten Ausbrechen und Eindrücken des Teilbereichs in den Auffangraum den Teilbereich in einer vom verbleibenden Trennbereich oder dem aufgetrennten Leiterelement entfernten Position zu fixieren. Hierdurch wird ein erneutes unbeabsichtigtes Schließen des aufgetrennten Stromkreises durch lose im Auffangraum befindliche ausgebrochene Leiterteile verhindert.

In der bevorzugten Ausführungsform wird nach dem Aktivieren des Mediums in der Kammer des Gehäuses oder im Innenraum des topfförmigen Treibspiegels und nach dem Ausbrechen zumindest eines Teilbereichs des Trennbereichs eine Gasströmung über den zumindest teilweise aufgetrennten Trennbereich erzeugt. Die Gasströmung, die durch den auf den Trennbereich wirkenden Auslösedruck erzeugt wird, kann nach dem Ausbrechen eines Teilstücks bzw. dem Auftrennen des Trennbereichs ein ggf. bei hohen Strömen unmittelbar nach dem Auftrennen entstehendes Plasma kühlen, wodurch zusätzlich ein relativ langsames Abnehmen des Stroms während des "Auschaltvorgangs" und damit geringe Induktionsspannungen erreichbar sind. Andererseits dient die Gasströmung auch dazu, um das Plasma sicher "auszublasen", falls kein isolierender Treibspiegel verwendet wird.

In einer Ausführungsform der Erfindung kann der Auffangraum Öffnungen für das Entweichen des aus dem Auffangraum zu verdrängenden Gasvolumens und/oder für das Gasvolumen aufweisen, welches den Auslösedruck erzeugt. Durch die Dimensionierung der Öffnungen kann die Stärke der Gasströmung über den Trennbereich in gewünschter Weise eingestellt werden.

Weitere Ausführungsformen der Erfindung ergeben sich aus den Unteransprüchen. Die Erfindung wird nachfolgend anhand in der Zeichnung dargestellter Ausführungsbeispiele näher erläutert. In der Zeichnung zeigen:
- Fig. 1 bis 5: eine schematische Aneinanderreihung von fünf möglichen Ausführungsformen der Vorrichtung nach der Erfindung im Längsschnitt;
- Fig. 6: einen Querschnitt durch die Vorrichtung nach Fig. 1;
- Fig. 7: einen Querschnitt durch die Vorrichtung nach Figur 5;
- Fig. 8: mögliche Strukturen für Schwächungen des Leiterquerschnitts im Trennbereich in schematischer Darstellung ohne den Leiter. jeweils in Draufsicht;
- Fig. 9: Darstellungen von Leiterelementen mit verschiedenartig geschwächten Trennbereichen (Fig. 9a, 9b, 9c; Längsschnitte eines Trennbereichs mit einseitigen bzw. beidseitigen Schwächungen über die gesamte Leiterbreite und mit einer relativ großen axialen Ausdehnung; Fig. 9b: Draufsicht auf den Trennbereich in Fig. 9a; Fig. 9c: Draufsicht auf einen Trennbereich einer Schwächung in Form einer ovalen Ausnehmung);

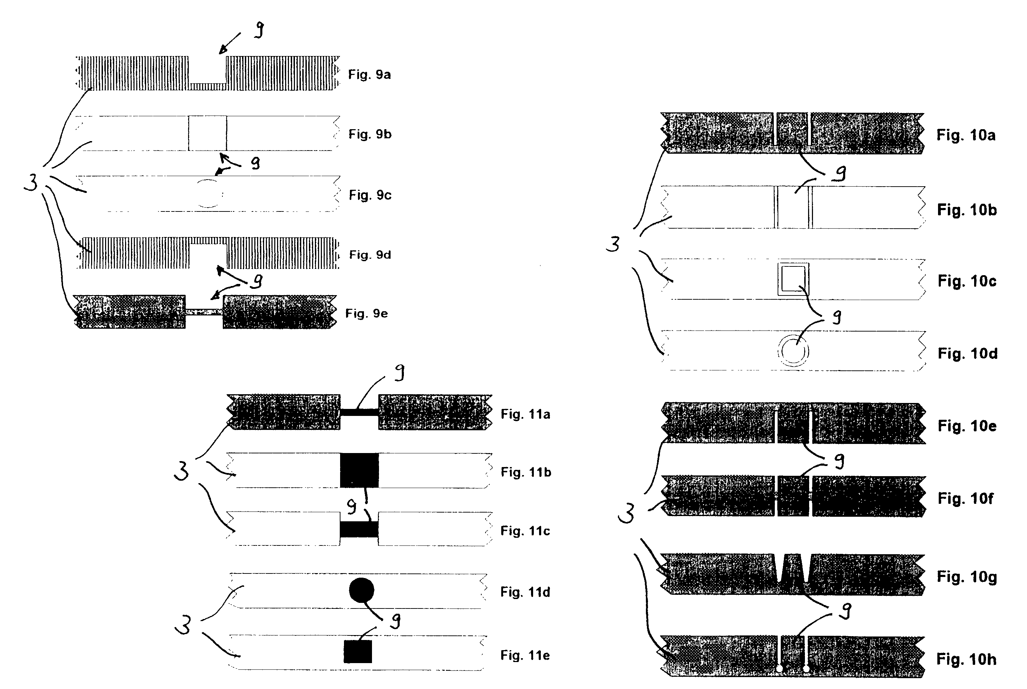

- Fig. 10: Darstellungen von Leiterelementen mit verschiedenartig geschwächten Trennbereichen (Fig. 10a, 10e, 10f: Längsschnitte eines Trennbereichs mit jeweils zwei axial beabstandeten einseitigen bzw. beidseitigen schlitzförmigen Schwächungen über die gesamte Leiterbreite; Fig. 10g: Längsschnitt entsprechend Fig. 10a, jedoch mit v-förmigen Schlitzen; Fig. 10h: Längsschnitt entsprechend Fig. 10a, jedoch mit Querbohrung am Boden der Schlitze; Fig. 10b: Draufsicht entsprechend Fig. 10a; Fig. 10c: Draufsicht auf einen Trennbereich mit rechteckig verlaufendem Schlitz; Fig. 10d: Draufsicht auf einen Trennbereich mit kreisförmig verlaufendem Schlitz);
- Fig. 11: Darstellungen von Leiterelementen mit verschiedenartig geschwächten Trennbereichen und gleichzeitiger Ausbildung zumindest eines Teils des Trennbereichs aus einem schlechter leitenden Material (Fig. 11a: Längsschnitt eines Trennbereichs mit beidseitiger Schwächung über eine relativ große axiale Ausdehnung; Fig. 11b: Draufsicht entsprechend Fig. 11a; Fig. 11c: Draufsicht entsprechend Fig. 11a, jedoch mit geringerer Stegbreite des Trennbereichs; Fig. 11d, 11e: Draufsicht auf einen Trennbereich mit kreisförmiger bzw. rechteckiger Schwächung);
- Fig. 12 bis 18: jeweils eine weitere Ausführungsform der Vorrichhuy nach der Erfindung im Längsschnitt.

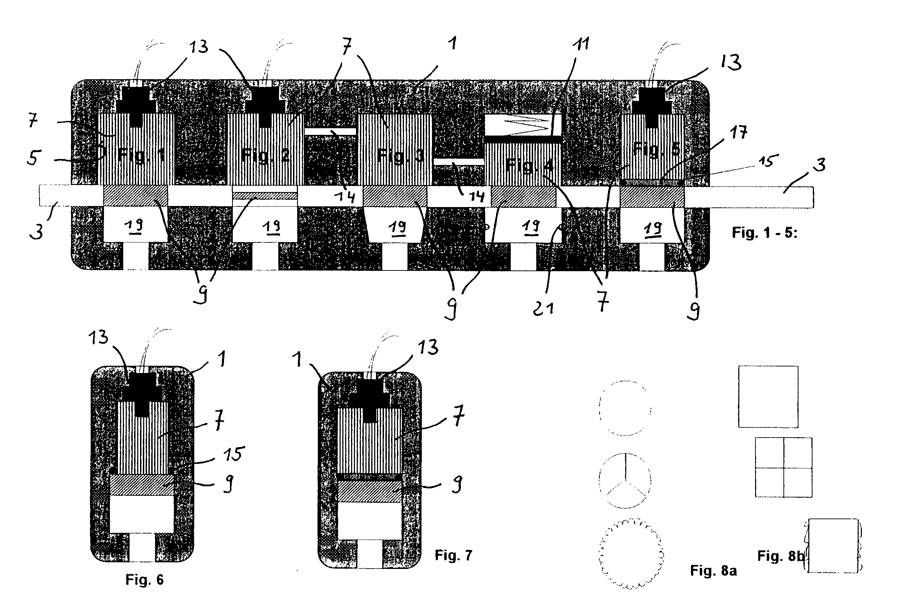

Die Fig. 1 bis 5 zeigen in einer schematischen Schnittdarstellung unterschiedliche Ausführungsformen von Vorrichtungen zum Auftrennen eines elektrischen Stromkreises, insbesondere für hohe Stromstärken. Aus Gründen der Einfachheit sind mehrere unterschiedliche Ausfuhrungsformen in ein einziges Gehäuse 1 integriert und auf ein einziges aufzutrennendes Leiterelement 3 wirkend dargestellt. Selbstverständlich wird man in der Praxis üblicherweise kaum mehrere Vorrichtungen in der dargestellten Art und Weise in Serie schalten, obwohl dies grundsätzlich möglich wäre. Es ist jedoch durchaus von Vorteil, ggf. mehrere Trennvorrichtungen in ein einziges Gehäuse zu integrieren, welche jeweils auf verschiedene zu trennende Leiterelemente wirken.

Bei der Ausführungsform nach Fig. 1 ist auf einer Seite des im Gehäuse angeordneten Leiterelements 3 eine Brennkammer 5 vorgesehen, die mit einer pyrotechnischen Mischung 7 gefüllt ist. Anstelle der pyrotechnischen Mischung kann ganz allgemein ein aktivierbares Medium in der Kammer 5 vorgesehen sein. Das aktivierbare Medium muss auch nicht, wie in den Fällen der Ausführungsformen nach den Figuren 1 bis 3 und 5 sowie 12 bis 18 dargestellt, die Brennkammer voll ausfüllen. Vielmehr wird in der Regel ein geringeres Volumen eines aktivierbaren Mediums ausreichen, um einen ausreichend hohen Druck zu erzeugen um einen Trennbereich 9 des Leiterelements 3 so zu beaufschlagen, dass dieser zumindest teilweise ausbricht und der Strom über das Leiterelement 3 unterbrochen wird.

Fig. 4 zeigt eine Ausführungsform, bei der die Brennkammer 5 nur teilweise mit einer pyrotechnischen Mischung 7 bzw. einem aktivierbaren Medium gefüllt ist. Um zu gewährleisten, dass das aktivierbare Medium aus nachstehend erläuterten Gründen in gutem Wärmekontakt mit dem Trennbereich 9 bzw. dem Leiterelement 3 steht, ist eine federbeaufschlagte Platte 11 vorgesehen, welche das meist pulverförmige Medium in Richtung auf den Trennbereich 9 presst. Bei einer Aktivierung des Medium zur Erzeugung des Auslösedrucks gibt die federbeaufschlagte Platte das Volumen der Brennkammer nahezu vollständig wieder frei.

Der Trennbereich 9 ist vorzugsweise in irgendeiner Weise geschwächt ausgebildet, um ein leichteres Ausbrechen bzw. Aufbrechen zu ermöglichen. Hierzu zeigen die Fig. 8a und 8b entsprechende linienförmige Strukturen, die beispielsweise durch Prägen oder dergleichen in den Trennbereich eingebracht werden können. Die linienförmigen Schwächungen werden vorzugsweise an der der Brennkammer 5 zugewandten Seite des Trennbereichs 9 vorgesehen. Dabei können die in Fig. 8a und 8b dargestellten Strukturen entweder vollständig oder nur teilweise in die Oberfläche des Trennbereichs 9 eingebracht werden. Insofern sind die Strukturen beispielsweise als Strukturen eines Prägestempels aufzufassen, der einen größeren oder kleineren Durchmesser aufweisen kann als der Durchmesser oder die Breite des Trennbereichs 9. Zudem können die Strukturen mittig oder außermittig, bezogen auf die Achse des Leiterelements 3, auf dem Trennbereich vorgesehen werden.

Die in den Fig. 8a und 8b jeweils in der Mitte gezeigten Strukturen weisen Verbindungslinien auf, die sich zwischen einer geschlossenen Umfangslinie erstrekken. Hierdurch kann erreicht werden, dass der Trennbereich flügelartig aufgebrochen wird, wobei die Flügel jeweils an der Umfangslinie mit dem Trennbereich verbunden bleiben und der Trennbereich an den sich kreuzenden Linien aufbricht.

Der Trennbereich 9 selbst kann, wie in Fig. 2 dargestellt, insgesamt einen geringeren Querschnitt aufweisen als das übrige Leiterelement 3. Die zusätzlichen schwächenden Strukturen nach Fig. 8a und 8b können auch zusätzlich vorgesehen sein.

Das aktivierbare Medium 7 kann bei den in den Fig. 1, 2, 5 bis 14, 17 und 18 dargestellten Ausführungsformen vorzugsweise auf zwei unterschiedliche Weisen aktiviert werden: Zum einen kann ein Anzünd- oder Zündelement 13 vorgesehen sein, das über ein elektrisches Signal, beispielsweise das Zündsignal für einen Airbag, angesteuert werden kann und das aktivierbare Medium 7 aktiviert.

Zum anderen kann das aktivierbare Medium in gut wärmeleitendem Kontakt mit dem Leiterelement 3 bzw. dem Trennbereich 9 stehen. Hierdurch kann erreicht werden, dass bei Verwendung eines temperaturempfindlichen aktivierbaren Mediums die Vorrichtung ausgelöst wird, wenn das Leiterelement und/oder der Trennbereich eine vorbestimmte Schwellentemperatur übersteigen.

Bei beiden Möglichkeiten können mehrere Vorrichtungen durch die Verbindung der jeweiligen Brennkammern 5 mittels Kanälen 14 gleichzeitig bzw. zeitlich geringfügig verzögert nacheinander ausgelöst werden. Diese Möglichkeit ist schematisch in den Fig. 2 bis 4 dargestellt, wobei nach einem Aktivieren der Vorrichtung in Fig. 2 auch die Vorrichtungen in Fig. 3 und 4 zwangsweise aktiviert werden.

Aus Fig. 6, die einen Querschnitt durch Fig. 1 darstellt, ist erkennbar, dass zur Abdichtung der Brennkammer 5 gegenüber dem Trennbereich 9 bzw. dem Leiterelement 3 die Brennkammer eine geringere Breite (senkrecht zum Leiterelement) aufweisen kann, und an der Schulter zwischen Brennkammer und dem Trennbereich bzw. dem Leiterelement eine Dichtung 15, beispielsweise in Form eines O-Rings, vorgesehen sein kann. Zur Abdichtung ist anstelle der Verwendung eines O-Rings auch eine feste Verbindung des Leiterelements mit dem Gehäuse möglich, beispielsweise durch Verschweißen, Verkleben oder das direkte Umspritzen des Leiters.

Fig. 5 und die diese Ausführungsform in einem Querschnitt darstellende Fig. 7 zeigen die Verwendung eines plattenförmig ausgebildeten Treibspiegels 17, wobei die Brennkammer 5 gegenüber dem Treibspiegel 17 bzw. dem Leiterelement und dem Trennbereich 9 wiederum mittels einer Dichtung 15 abgedichtet sein kann. Der Treibspiegel stellt sicher, dass bei einer Druckbeaufschlagung des Trennbereichs nicht lediglich ein geringer Durchbruch entsteht, durch den das den Druck erzeugende Gas entweicht, ohne den Trennbereich 9 vollständig in der gewünschten Weise auszubrechen oder aufzubrechen. Darüber hinaus ist der Treibspiegel vorzugsweise so bemessen, dass das Medium 7 in der Brennkammer 5 in gut wärmeleitendem Kontakt mit dem Leiterelement 3 bzw. dem Trennbereich 9 steht.

Allen in der Zeichnung dargestellten Ausführungsformen ist gemeinsam, dass an der der Brennkammer 5 gegenüberliegenden Seite des Trennbereichs 9 ein Auffangraum 19 vorgesehen ist. Dieser dient zur Aufnahme von aus dem Trennbereich ausgebrochenen Teilstücken bzw. zur Aufnahme von umgebogenen Enden des Leiterelements bzw. flügelartig aufgebrochenen und umgebogenen Teilen des Trennbereichs.

Wie in Fig. 3 dargestellt, kann der Auffangraum 19 sich nach unten, d.h. in der Richtung vom Trennbereich 9 weg, verjüngend ausgebildet sein, so dass ein abgeschertes Teilstück, das druckbeaufschlagt in den Auffangraum eingedrückt wird, sicher darin gehalten wird. Hierdurch können Bewegungen oder Erschütterungen der Vorrichtung nicht dazu führen, dass der Strompfad über das Leiterelement 3 in unerwünschter Weise wieder geschlossen wird.

Fig. 3 zeigt hierzu eine andere Lösungsmöglichkeit: An der Seitenwand des Auffangraums 19 sind ein oder mehrere Vorsprünge 21 vorgesehen, die ein Einrasten des abgescherten Trennbereichs 9 in den unteren Teil des Auffangraums bewirken.

Die in Fig. 9, 10 und 11 dargestellten Trennbereiche 9 bzw. Leiterelemente 3 sind in Verbindung mit jeder dargestellten Ausführungsform der eifmdungsgemäßen Vorrichtung einsetzbar.

Fig. 9 zeigt Trennbereiche 9, die jeweils über die volle Breite einseitig oben (Fig. 9a, Fig. 9b als Draufsicht entsprechend Fig. 9a), einseitig unten (Fig. 9d) oder beidseitig (Fig. 9e) geschwächt sind. Fig. 9c zeigt als Draufsicht auf ein Leiterelement 3 eine Möglichkeit einer Schwächung des Trennbereichs 9 in Form einer Vertiefung mit von oben gesehen elliptischer Struktur. Durch das Ausbrechen des Bodens der schwächenden Struktur wird der Strompfad über das Leiterelement nicht sofort vollständig unterbrochen, sondern in seinem Querschnitt reduziert. Hierdurch kann bei geeigneter Bemessung des verbleibenden Leiterquerschnitts eine Notversorgung von Verbrauchern aufrecht erhalten werden. Dieser Leiterquerschnitt wird dabei vorzugsweise so bemessen, dass sich der Widerstand des Trennbereichs im Strompfad soweit erhöht, dass die Stromstärke auf einen zulässigen Wert zurückgeht. Zudem kann der verbleibende Leiterquerschnitt so bemessen sein, dass der über den Trennbereich nach dem Ausbrechen eines Teils des Trennbereichs fließende Strom den verbleibenden Leiterquerschnitt so erhitzt, dass nach einer vorbestimmten Zeit der Trennbereich wie eine Schmelzsicherung durchbrennt.

Fig. 10 zeigt weitere Möglichkeiten zur Schwächung des Trennbereichs 9. wobei jeweils nur schmale Einschnitte vorgesehen sind. Gegenüber den Ausführungsformen nach Fig. 9 und 11 wird hier erreicht, dass die Wärmekapazität des Trennbereichs nicht wesentlich reduziert wird und sich der Trennbereich bei hohen Strömen langsamer erhitzt.

Die Einschnitte können über die gesamte Breite des Trennbereichs 9 verlaufen, wobei in diesem Fall vorzugsweise zwei axial beabstandete Einschnitte vorgesehen sind. In diesen Fällen wird der Bereich zwischen den Einschnitten herausgebrochen. Die Einschnitte können von oben (Fig. 10a und deren Draufsicht 10b, Fig. 10h), von unten (Fig. 10e) oder von unten und oben (Fig. 10f) geführt werden. Zur Optimierung des Abscherverhaltens können die Einschnitte innenseitig mit einer Querbohrung versehen (Fig. 10h) oder sich nach innen verjüngend ausgebildet sein (Fig. 10g). Analog zu Fig. 9c können auch Einschnitte mit beliebig verlaufenden geschlossenen Kurven vorgesehen sein, so dass nur die betreffenden Bereiche des Trennbereichs ausgebrochen werden und zunächst keine vollständige Unterbrechung des Strompfads, sondern nur eine Reduzierung des Leiterquerschnitts bewirkt wird (vgl. oben).

Fig. 11 zeigt Ausführungsformen für den Trennbereich ähnlich Fig. 9, wobei jedoch das auszubrechende Teilstück des Trennbereichs aus einem Material besteht, das schlechter leitet als das Material des übrigen Leiterelements 3. Hierdurch nimmt der Trennbereich eine gegenüber dem übrigen Leiterelement höhere Temperatur an. Dies kann dazu dienen, um eine Auslösung der Vorrichtung abhängig von der Temperatur des Leiterelements 3 bzw. des Trennbereichs 9 bereits bei relativ niedriger Temperatur des Leiters 3 zu bewirken oder um ein Medium verwenden zu können, welches eine hohe Auslösetemperatur erfordert.

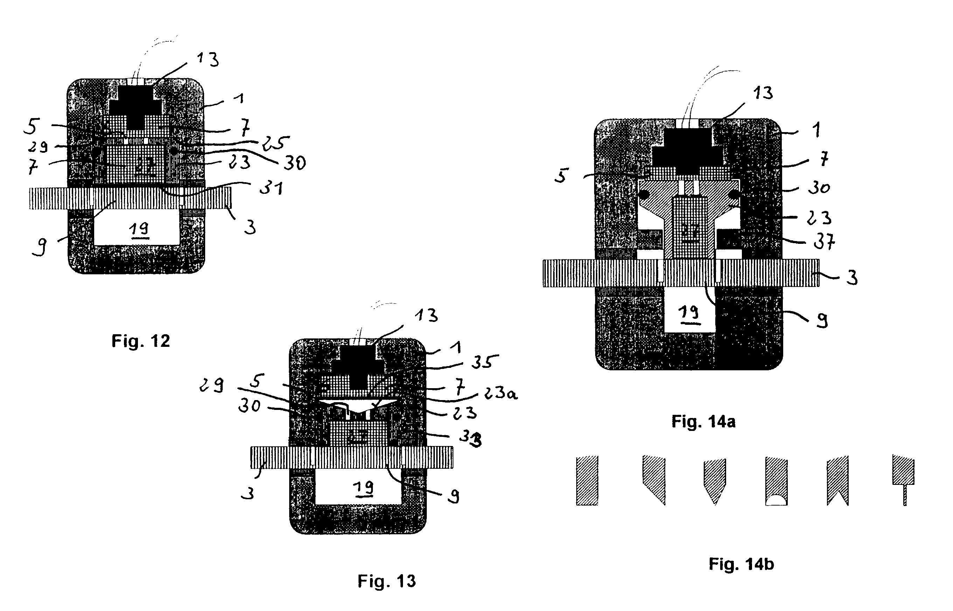

Bei der in Fig. 12 dargestellten Ausführungsform ist ein topfförmiger Treibspiegel 23 verwendet. Oberhalb des Treibspiegels 23 ist die Brennkammer 5 vorgesehen, wobei die darin befindliche Treibladung bzw. das aktivierbare Medium mittels eines Anzünd- oder Zündstücks 13 bzw. ganz allgemein durch ein ansteuerbares Zündmittel ausgelöst werden kann. Der Treibspiegel stützt sich gegen eine Anschlagschulter 25 im Gehäuse 1 ab.

Im Innenraum 27 des Treibspiegels ist ebenfalls ein durch Temperatur aktivierbares Medium 7 enthalten, welches in gut wärmeleitendem Kontakt mit dem Leiterelement 3 bzw. dem Trennbereich 9 steht. Der Innenraum 27 steht über Öffnungen 29 in der Deckenwandung des Treibspiegels mit der Brennkammer 5 in Verbindung. Die Öffnungen 29 können verdämmt sein, beispielsweise mittels einer Folie, wobei die Dämmung bei Überschreiten einer vorbestimmten Druckdifferenz zwischen dem Innenraum 27 und der Brennkammer 5 durchbricht. Bei dieser Ausführungsform kann daher bei einem angesteuerten Aktivieren des Medium in der Brennkammer 5 auch das Medium 7 im Inneren des Treibspiegels 23 aktiviert werden, wenn nicht vor dem Erreichen des Drucks, der für das Durchbrechen der Dämmung erforderlich ist, die Druckbeaufschlagung des Trennbereichs 9 über die Stirnseiten der seitlichen Wandung des topfförmigen Treibspiegels so groß wird, dass der betreffende Teil des Trennbereichs ausgebrochen oder aufgebrochen wird und sich der Treibspiegel ggf. zusammen mit dem ausgebrochenen Teilstück in den Auffangraum 19 hinein bewegt. Wird das Medium 7 im Innenraum zusätzlich aktiviert, so erfolgt eine weitere Druckerhöhung und das betreffende Teilstück des Trennbereichs wird ausgebrochen.

Wird bei der Ausführungsform nach Fig. 12 zunächst das Medium 7 im Innenraum 27 des Treibspiegels 23 aktiviert und reicht der hierdurch erzeugte Druck nicht aus, um den Trennbereich 9 aus- bzw. aufzubrechen, so bricht ab einem gewissen Druck die Dämmung der Öffnungen 29 und das Medium in der Brennkammer 5 wird zusätzlich aktiviert. Hierdurch wird sichergestellt, dass der Trennbereich in jedem Fall in der gewünschten Weise aus- bzw. aufgebrochen wird.

Die Abdichtung der Brennkammer 5 erfolgt über eine Dichtung 30, z.B. einen O-Ring, zwischen der Außenwandung des Treibspiegels 23 und der Innenwandung des Gehäuses 1. Zur Abdichtung des Innenraum 27 des Treibspiegels 23 dient eine zwischen der Unterseite des Treibspiegels 23 und dem Leiterelement 3 vorgesehene Dichtungsfolie 31. Nach dem Ausbrechen des Trennbereichs 9 ist die Dichtwirkung der Folie 31 aufgehoben, so dass durch die Gasströmung in den Auffangraum 19 das Plasma ausgeblasen werden kann. Ist diese Blaswirkung in jedem Fall erwünscht, so muss die Dämmung der Öffnungen 29 so ausgelegt werden, dass auch bei einer Aktivierung des Mediums 7 in der Brennkammer 3 die Dämmung aufgebrochen wird.

Fig. 13 zeigt eine Ausführungsform, die im Wesentlichen mit der Ausführungsform nach Fig. 12 übereinstimmt. Anstelle der Dichtfolie wird jedoch eine ringförmige Dichtung 33 zwischen der Stirnseite der seitlichen Wandung des Treibspiegels 23 und dem Leiterelement 3 bzw. dem Trennbereich 9 verwendet. Die Deckenwandung 23a des Treibspiegels 23 ist bei dieser Ausführungsform konkav in Richtung auf die Brennkammer 5 ausgebildet. Hierdurch ergibt sich eine verbesserte Abdichtung der Außenwandung des Treibspiegels gegenüber der Innenwandung des Gehäuses. Zusätzlich ist eine Folie 35 verwendet. die dazu dient, das aktivierbare Medium 7 in der Brennkammer 3, das die Brennkammer nicht vollständig ausfüllt, in gutem Kontakt zum Anzündstück- oder Zündstück 13 zu halten.

Die Ausführungsform nach Fig. 14a entspricht wiederum weitgehend der Ausführungsform in Fig. 12, wobei der Treibspiegel 23 jedoch einen vergrößerten oberen, vom Medium 7 in der Brennkammer 5 beaufschlagbaren Bereich und einen topfförmigen unteren Bereich mit geringerem Durchmesser aufweist. Hierdurch ergibt sich der Vorteil, dass über die Stirnseite der Seitenwandung des topfförmigen Bereichs ein höherer Druck auf das Leiterelement 3 bzw. den Trennbereich 9 ausgeübt werden kann als bei der Ausführungsform nach Fig. 12. Zur Führung des Treibspiegels 23 ist im Gehäuse ein Führungsring 37 vorgesehen.

Die Stirnseite der Seitenwandung des Treibspiegels 23 kann bei den Ausführungsformen nach den Fig. 12 bis 14a zur weiteren Steigerung des Drucks bzw. der Abscherwirkung z.B. die in Fig. 14b dargestellten Querschnitte aufweisen.

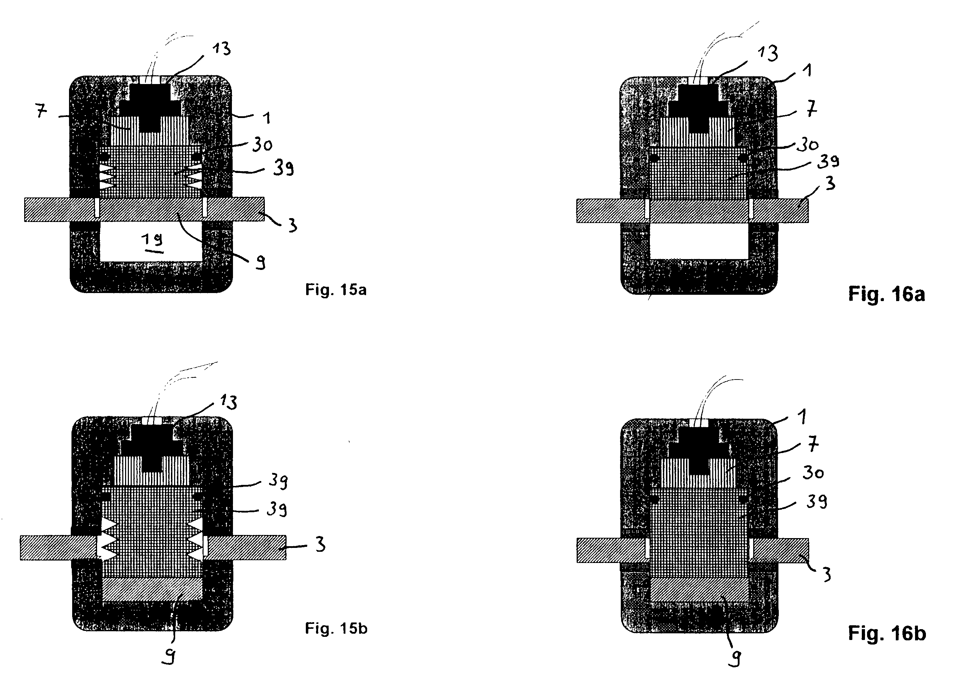

Die Fig. 15a und 15b zeigen eine Ausführungsform, bei der anstelle des Treibspiegels 23 in den Fig. 12 bis 14a, welcher in seinem Innenraum ein aktivierbares Medium aufnimmt, ein Treibspiegel 39 aus einem Memomaterial verwendet ist. Die Selbstauslösung durch eine unzulässig hohe Temperatur des Leiterelement 3 bzw. des Trennbereichs 9 wird dadurch erreicht, dass sich das Memomaterial des Treibspiegels bei Überschreiten einer Schwellentemperatur sprungartig in eine gespeicherte Form begibt, welche in Richtung der Längsachse des Treibspiegels 39 eine größere axiale Länge aufweist. Bei einer Selbstauslösung ergibt sich daher die in Fig. 15b gezeigt Stellung des Treibspiegels 39, in der der Treibspiegel den Trennbereich 9 ausgebrochen und in den Auffangraum 19 gedrückt hat. Um eine größere Längenänderung des Treibspiegels zu ermöglichen, weist dieser eine balgartig geformte Wandung auf.

Die Ausführungsform gemäß Fig. 16a und 16b ist weitestgehend mit der Ausführungsform nach Fig. 15 und 15b identisch. Es ist lediglich auf die gezackte bzw. balgartige Außenwandung des Treibspiegels 39 verzichtet.

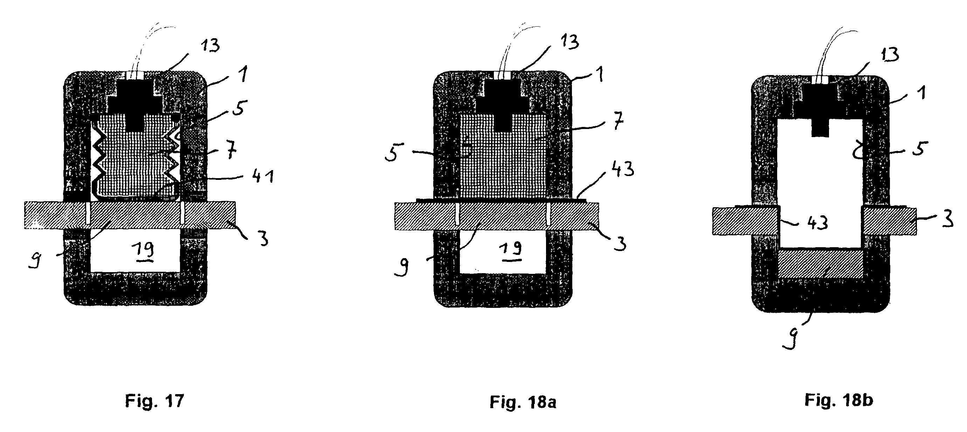

Bei der Vorrichtung nach Fig. 17, die weitestgehend mit der Ausführungsform nach Fig. 5 übereinstimmt, findet ein plattenförmiger Treibspiegel 41 Verwendung, der eine sich nach oben erstreckende balgartige Seitenwandung aufweist, in welcher das aktivierbare Medium 7 aufgenommen ist. Die Seitenwandung ist am oberen Ende mit der oberen Innenwandung der Brennkammer 5 abgedichtet. Bei dieser Ausführungsform kann somit gewährleistet werden, dass auch nach dem Aktivieren des Mediums 7 alle Rückstände innerhalb des Treibspiegels 41 verbleiben. Auch bei dieser Ausführungsform ist der Treibspiegel vorzugsweise so ausgebildet, dass das Medium 7 in gut wärmeleitendem Kontakt mit dem Leiterelement 3 bzw. dem Trennbereich 9 steht, um eine Selbstauslösung zu ermöglichen.

Die Ausführungsform nach den Fig. 18a und 18b ist weitestgehend mit der Ausführungsform nach Fig. 1 identisch. Zur Abdichtung der Brennkammer 5 gegenüber dem Leiterelement 3 ist jedoch eine Folie 43 verwendet, die zusammen mit dem Leiterelement in der Gehäusewandung aufgenommen ist. Die Folie ist so flexibel, dass sie nach dem Ausbrechen gedehnt und zusammen mit dem Trennbereich 9 in den Auffangraum 19 gedrückt wird. Auch bei dieser Ausführungsform bleiben alle Bestandteile des Mediums 7 innerhalb des Gehäuses, selbst wenn in der Wandung des Auffangraums 19 Auslassöffnungen vorgesehen sein sollten, um das im Auffangraum enthaltene Gas entweichen zu lassen Soll jedoch eine Blaswirkung, wie vorstehend erläuteil, erreicht werden, muss die Folie 41 so beschaffen sein, dass sie ab einer bestimmten Überdehnung reißt. um eine Gasströmung zuzulassen.

Abschließend sei bemerkt, dass selbstverständlich alle Merkmale, die vorstehend in Bezug auf einzelne Ausführungsformen beschrieben sind, auch in Verbindung mit anderen Ausführungsbeispielen verwendbar sind.

Das aktivierbare Medium kann auch ein inertes Gas sein, das in der Kammer 5 bzw. dem Innenraum 7 des Treibspiegels 23 eingeschlossen ist. Das Gas kann dann mit geeigneten Mitteln sprunghaft erhitzt (aktiviert) werden, so dass ein Auslösedruck entsteht. Bei den Mitteln kann es sich um einen Glühdraht oder einen Explosionsdraht handeln.

## Patentansprüche

1. Vorrichtung zum Auftrennen eines elektrischen Stromkreises, insbesondere für hohe Stromstärken,
a) mit einem Gehäuse (1), in welchem wenigstens ein elektrisches Leiterelement (3) vorgesehen ist, welches einen Trennbereich (9) aufweist und welches so in den aufzutrennenden Stromkreis einschaltbar ist, dass der aufzutrennende Strompfad über das Leiterelement (3) verläuft, und
b) mit im oder am Gehäuse (1) vorgesehenen aktivierbaren Mitteln (13, 7; 3, 9, 7) zur Erzeugung eines Auslösedrucks, welcher unmittelbar auf den Trennbereich (9) und/oder über einen in einer Ausgangsstellung den Trennbereich (9) beaufschlagenden Treibspiegel (17, 23, 39, 41) auf den Trennbereich (9) wirkt,
c) wobei die aktivierbaren Mittel eine im Gehäuse (1) vorgesehene, zumindest teilweise mit einem aktivierbaren, nach seiner Aktivierung Wärmeenergie abgebenden und/oder Gas erzeugenden Medium (7) gefüllte Kammer (5) umfassen und durch Aktivieren des Mediums (7) der den Trennbereich (9) unmittelbar oder über den Treibspiegel (17, 23, 39, 41) beaufschlagende Auslösedruck erzeugbar ist und
d) wobei der Trennbereich (9) und/oder der Treibspiegel (17, 23, 39, 41) so ausgebildet sind, dass nach einem Aktivieren der Mittel (13, 7; 3, 9, 7) der Trennbereich (9) vollständig aufgetrennt oder ausgebrochen oder der Querschnitt des Trennbereichs (9) reduziert wird,
**dadurch gekennzeichnet**,
e) dass das Medium (7) in gutem Wärmekontakt mit dem Leiterelement (3) und/oder dem Trennbereich (9) steht und
f) dass das aktivierbare Medium (7) durch thermische Energie aktivierbar ist, die vom Leiterelement (3) oder dem Trennbereich (9) abgegeben wird, falls die Temperatur des Leiterelements (3) oder des Trennbereichs (9) einen vorbestimmten Wert überschreitet.

2. Vorrichtung nach Anspruch 1 **dadurch gekennzeichnet, dass** das aktivierbare des Mediums (7) durch ein pyrotechnisches Material oder einem Gas mit innerer oder chemischer Energie gebildet ist.

3. Vorrichtung nach Anspruch 2, bei der zur Aktivierung des Mediums (7) ein Anzünd- oder Zündstück (13) vorgesehen ist.

4. Vorrichtung nach Anspruch 2, bei der zur Aktivierung des Mediums (7) ein durch elektrischen Strom beheizbarer Leiter oder ein durch einen sehr hohen elektrischen Strom zur Explosion bringbarer Leiter vorgesehen ist.

5. Vorrichtung nach einem der Ansprüche 2 bis 4, bei der das aktivierbare Medium (7) mittels eines der Kammer (5) zuführbaren Heißgases aktivierbar ist, wobei das Heißgas vorzugsweise aus einer weiteren Vorrichtung zum Auftrennen eines elektrischen Stromkreises zuführbar ist.

6. Vorrichtung nach einem der vorhergehenden Ansprüche, bei der der Treibspiegel (23) topfförmig ausgebildet ist oder einen topfförmigen Bereich aufweist, wobei der Treibspiegel (23) mit der Stirnseite der Seitenwandung den Trennbereich (9) beaufschlagt.

7. Vorrichtung nach Anspruch 6, bei der der Innenraum (27) des topfförmigen Treibspiegels (23) oder des topfförmigen Bereichs zumindest teilweise mit einem thermisch aktivierbaren, nach seiner Aktivierung Wärmeenergie abgebenden und/oder Gas erzeugenden Medium (7) gefüllt ist, vorzugsweise einem pyrotechnischen Material oder einem Gas mit innerer oder chemischer Energie, und bei der das Medium (7) in gutem Wärmekontakt mit dem Leiterelement (3) und/oder dem Trennbereich (9) steht.

8. Vorrichtung nach einem der vorhergehenden Ansprüche, bei der der Trennbereich (9) so ausgebildet ist, dass bei einer Druckbeaufschlagung ein Teilstück aus dem Trennbereich (9) ausgebrochen wird oder der Trennbereich (9) in einem Teilbereich so aufgebrochen wird, dass der Trennbereich (9) vollständig unterbrochen oder der Querschnitt im Trennbereich (9) auf einen vorbestimmten Wert reduziert ist.

9. Vorrichtung nach Anspruch 8, bei der der Trennbereich (9) zumindest in Teilbereichen in seinem Querschnitt gegenüber dem übrigen Leiterelement (3) geschwächt ist.

10. Vorrichtung nach einem der vorhergehenden Ansprüche, bei der der Trennbereich (3) zumindest teilweise aus einem gegenüber dem übrigen Leiterelement (3) schlechter leitenden Material besteht.

11. Vorrichtung nach einem der Ansprüche 2 bis 10, bei der an der mit Druck beaufschlagbaren Oberfläche des Trennbereichs (9) eine die Kammer (5) oder den Innenraum (27) des topfförmigen Treibspiegels (23) abdichtende flexible Membran (31) vorgesehen ist.

12. Vorrichtung nach einem der vorhergehenden Ansprüche, bei der nach dem Aktivieren des Mediums (7) in der Kammer (5) des Gehäuses (1) oder im Innenraum (27) des topfförmigen Treibspiegels (23) und nach dem Ausbrechen zumindest eines Teilbereichs des Trennbereichs (9) eine Gasströmung über den zumindest teilweise aufgetrennten Trennbereich (9) erzeugbar ist.

13. Vorrichtung zum Auftrennen eines elektrischen Stromkreises, insbesondere für hohe Stromstärken,
a) mit einem Gehäuse (1), in welchem wenigstens ein elektrisches Leiterelement (3) vorgesehen ist, welches einen Trennbereich (9) aufweist und welches so in den aufzutrennenden Stromkreis einschaltbar ist, dass der aufzutrennende Strompfad über das Leiterelement (3) verläuft, und
b) mit im oder am Gehäuse (1) vorgesehenen aktivierbaren Mitteln zur Erzeugung eines auf den Trennbereich (9) wirkenden Auslösedrucks,
c) wobei der Trennbereich (9) so ausgebildet ist, dass nach einem Aktivieren der aktivierbaren Mittel der Trennbereich (9) vollständig aufgetrennt oder ausgebrochen oder der Querschnitt des Trennbereichs (9) reduziert wird,
**dadurch gekennzeichnet**,
d) dass die aktivierbaren Mittel einen Treibspiegel (39) umfassen, der aus einem Memomaterial besteht, wobei sich der Treibspiegel (39) bei Überschreiten einer Schwelltemperatur (Aktivierung) in eine gespeicherte Form begibt, die in der Richtung quer zum Leiterelement (3) eine größere Ausdehnung aufweist als die Form des Treibspiegels (39) in der Ausgangsstellung bei einer Temperatur kleiner als die Schwelltemperatur,
e) dass sich der Treibspiegel (39) mit einem Ende an einem bezüglich des Gehäuses (1) ortsfesten Anschlag abstützt und
f) dass der Treibspiegel (39) mit seinem anderen Ende in gut wärmeleitendem Kontakt mit dem Leiterelement (3) und/oder dem Trennbereich (9) steht,
g) wobei der Treibspiegel durch thermische Energie aktivierbar ist, die vom Leiterelement (3) oder dem Trennbereich (9) abgegeben wird, falls die Temperatur des Leiterelements (3) oder des Trennbereichs (9) einen vorbestimmten Wert überschreitet.

14. Vorrichtung nach einem der vorhergehenden Ansprüche, bei der durch Druckbeaufschlagung zumindest ein Teilbereich des Trennbereichs (9) ausbrechbar ist und im Gehäuse (1) ein Auffangraum (1) zur Aufnahme des ausgebrochenen Teilbereichs vorgesehen ist.

15. Vorrichtung nach Anspruch 14, bei der der Auffangraum (19) in seiner Geometrie so ausgebildet ist oder im Auffangraum (19) Mittel vorgesehen sind, um nach dem druckbeaufschlagten Ausbrechen und Eindrücken des Teilbereichs in den Auffangraum (1) den Teilbereich in einer vom verbleibenden Trennbereich (9) oder dem aufgetrennten Leiterelement (3) entfernten Position zu fixieren.

16. Vorrichtung nach Anspruch 14 oder 15, bei der der Auffangraum (19) Öffnungen für das Entweichen eines Gasvolumens aufweist.

## Claims

1. Apparatus for disconnecting an electrical circuit, in particular for high current densities,
a) having an housing (1), in which at least one electrical conductor element (3) is provided, which has an isolating area (9) and can be connected in the circuit which is to be disconnected such that the current path which is to be disconnected runs via the conductor element (3), and
b) having means (13, 7; 3, 9, 7), which can be activated and are provided in or on the housing (1), for producing an initiation pressure, which acts on the isolating area (9) directly, and/or acts on the isolating area (9) via a propellant disc (17, 23, 39, 41), which acts on the isolating area (9) in an initial position,
c) in which the means which can be activated comprise a chamber (5) which is provided in the housing (1), and is at least partially filled with a medium (7) which can be activated and emits thermal energy and/or produces gas after its activation, and the initiation pressure, which acts on the isolating area (9) directly or via the propellant disc (17, 23, 39, 41), can be produced by activation of the medium (7), and
d) in which the isolating area (9) and/or the propellant disc (17, 23, 39, 41) are/is designed such that, after activation of the means (13, 7; 3, 9, 7), the isolating area (9) is completely disconnected or is knocked out, or the cross section of the isolating area (9) is reduced,
**characterized**
e) in that the medium (7) makes good thermal contact with the conductor element (3) and/or with the isolating area (9), and
f) in that the medium (7) which can be activated can be activated by thermal energy which is emitted from the conductor element (3) or from the isolating area (9) if the temperature of the conductor element (3) or of the isolating area (9) exceeds a predetermined value.

2. Apparatus according to Claim 1, **characterized in that** the medium (7) which can be activated is formed by a pyrotechnic material or by a gas with internal or chemical energy.

3. Apparatus according to Claim 2, in which an ignition or firing piece (13) is provided for activation of the medium (7).

4. Apparatus according to Claim 2, in which a conductor which can be heated by electrical current or a conductor which can be caused to explode by a very high electrical current is provided for activation of the medium (7).

5. Apparatus according to one of Claims 2 to 4, in which the medium (7) which can be activated can be activated by means of a hot gas which can be supplied to the chamber (5), in which case the hot gas can preferably be supplied from a further apparatus for disconnecting an electrical circuit.

6. Apparatus according to one of the preceding claims, in which the propellant disc (23) is pot-shaped, or has a pot-shaped area, with the end face of the side wall of the propellant disc (23) acting on the isolating area (9).

7. Apparatus according to Claim 6, in which the interior (27) of the pot-shaped propellant disc (23) or of the pot-shaped area is at least partially filled with a medium (7) which can be activated thermally and emits thermal energy and/or produces gas after its activation, preferably a pyrotechnic material or a gas with internal or chemical energy, and in which the medium (7) makes good thermal contact with the conductor element (3) and/or with the isolating area (9).

8. Apparatus according to one of the preceding claims, in which the isolating area (9) is designed such that, when pressure is applied, a part of the isolating area (9) is knocked out or the isolating area (9) is broken up into an area element, such that the isolating area (9) is completely interrupted, or the cross section in the isolating area (9) is reduced to a predetermined value.

9. Apparatus according to Claim 8, in which the cross section of at least area elements of the isolating area (9) is weakened in comparison to the rest of the conductor element (3).

10. Apparatus according to one of the preceding claims, in which the isolating area (9) is at least partially composed of a material which is less conductive than the rest of the conductor element (3).

11. Apparatus according to one of Claims 2 to 10, in which a flexible membrane (31), which seals the chamber (5) or the interior (27) of the pot-shaped propellant disc (23), is provided on that surface of the isolating area (9) to which pressure can be applied.

12. Apparatus according to one of the preceding claims, in which, after activation of the medium (7) in the chamber (5) of the housing (1), or in the interior (27) of the pot-shaped propellant disc (23), and after the knocking out of at least one area element of the isolating area (9), a gas flow can be produced via the at least partially disconnected isolating area (9).

13. Apparatus for disconnecting an electrical circuit, in particular for high current densities,
a) having a housing (1), in which at least one electrical conductor element (3) is provided, which has an isolating area (9) and can be connected in the circuit which is to be disconnected such that the current path which is to be disconnected runs via the conductor element (3), and
b) having means, which can be activated and are provided in or on the housing (1), for producing an initiation pressure which acts on the isolating area (9),
c) in which the isolating area (9) is designed such that, after activation of the means which can be activated, the isolating area (9) is completely disconnected or knocked out, or the cross section of the isolating area (9) is reduced,
**characterized**
d) in that the means which can be activated comprise a propellant disc (39) which is composed of a memory material, with the propellant disc (39) adopting a stored shape when a threshold temperature is exceeded (activation), which stored shape has a greater extent in the transverse direction with respect to the conductor element (3) than the shape of the propellant disc (39) in the initial position when the temperature is lower than the threshold temperature,
e) in that one end of the propellant disc (39) is supported on a stop whose position is fixed with respect to the housing (1), and
f) in that the other end of the propellant disc (39) makes good thermal contact with the conductor element (3) and/or with the isolating area (9),
g) in which case the propellant disc can be activated by thermal energy which is emitted from the conductor element (3) or from the isolating area (9) when the temperature of the conductor element (3) or of the isolating area (9) exceeds a predetermined value.

14. Apparatus according to one of the preceding claims, in which at least an area element of the isolating area (9) can be knocked out by an application of pressure, and a catchment area (1) for holding the knocked-out area element is provided in the housing (1).

15. Apparatus according to Claim 14, in which the geometry of the catchment area (19) is designed, or means are provided in the catchment area (19), in order to fix the area element in a position away from the remaining isolating area (9) or the disconnected conductor element (3) after the area element has been knocked out by pressure and has been put into the catchment area (1).

16. Apparatus according to Claim 14 or 15, in which the catchment area (19) has openings for a gas volume to escape.

## Revendications

1. Dispositif permettant de couper un circuit électrique, en particulier pour de forts ampérages
a) avec un logement (1) dans lequel est prévu au moins un élément conducteur (3) qui présente une zone de déconnexion (9) et qu'on peut insérer dans un circuit électrique à couper de telle sorte que le trajet du courant à couper passe par l'élément conducteur (3) et
b) avec des milieux (13, 7 ; 3, 9, 7) activables prévus dans ou sur le logement (1) destinés à produire une pression de déclenchement, laquelle agit immédiatement sur la zone de déconnexion (9) et/ou agit sur la zone de déconnexion (9) par un miroir d'excitation (17, 23, 39, 41) qui contrôle la zone de déconnexion (9) dans une position de départ,
c) où les milieux activables contiennent une chambre prévue dans le logement (1), emplie au moins en partie d'un milieu (7) activable qui, suite à son activation, dégage de l'énergie calorifique et/ou produit du gaz et où la pression de déclenchement contrôlant la zone de déconnexion (9) directement ou au moyen du miroir d'excitation (17, 23, 39, 41) peut être produite par l'activation du milieu (7) et
d) où la zone de déconnexion (9) et/ou le miroir d'excitation (17, 23, 39, 41) sont formés de telle manière que, suite à une activation du milieu (13, 7 ; 3, 9, 7), la zone de déconnexion (9) est complètement interrompue ou coupée ou que la section transversale de la zone de déconnexion (9) est réduite,
**caractérisé en ce que**
e) le milieu (7) a un bon contact thermique avec l'élément de conduction (3) et/ou avec la zone de déconnexion (9) et
f) le milieu (7) activable peut être activé par l'énergie thermique qui est dégagée par l'élément conducteur (3) ou par la zone de déconnexion (9) au cas où la température de l'élément conducteur (3) ou de la zone de déconnexion (9) dépasse une valeur prédéterminée.

2. Dispositif selon la revendication 1 **caractérisé en ce que** le milieu activable (7) est composé d'un matériau pyrotechnique ou d'un gaz avec une énergie interne ou chimique.

3. Dispositif selon la revendication 2 dans lequel on a prévu une pièce d'allumage ou d'amorçage (13) pour activer le milieu (7).

4. Dispositif selon la revendication 2 dans lequel on a prévu, pour activer le milieu (7), un conducteur qu'on peut chauffer par un courant électrique ou un conducteur qu'on peut amener à explosion au moyen d'un courant électrique très élevé.

5. Dispositif selon l'une des revendications 2 à 4 dans lequel le milieu activable (7) peut être activé au moyen d'un gaz chaud qu'on peut amener à la chambre (5) de préférence à partir d'un autre dispositif destiné à interrompre un circuit électrique.

6. Dispositif selon l'une des revendications précédentes dans lequel le miroir d'excitation (23) a une forme de creuset ou présente une zone en forme de creuset, le miroir d'excitation (23) contrôlant la zone de déconnexion (9) par la face frontale de la paroi latérale.

7. Dispositif selon la revendication 6 dans lequel l'espace interne (27) du miroir d'excitation (23) en forme de creuset ou de la zone en forme de creuset est empli au moins en partie par un milieu (7) activable thermiquement qui, suite à son activation, dégage de l'énergie calorifique et/ou produit du gaz, de préférence par un matériau pyrotechnique ou par un gaz comportant une énergie interne ou chimique, et dans lequel le milieu (7) a un bon contact thermique avec l'élément de conduction (3) et/ou avec la zone de déconnexion (9).

8. Dispositif selon l'une des revendications précédentes dans lequel la zone de déconnexion (9) est formée de telle sorte que, par un contrôle de la pression, un élément de la zone de déconnexion (9) est coupé ou que la zone de déconnexion (9) est interrompue dans une zone partielle de telle sorte que la zone de déconnexion (9) est entièrement déconnectée ou que la section transversale de la zone de déconnexion (9) est réduite à une valeur prédéterminée.

9. Dispositif selon la revendication 8 dans lequel la zone de déconnexion (9) est réduite au moins en zones partielles dans sa section transversale par rapport au reste de l'élément de conduction (3).

10. Dispositif selon l'une des revendications précédentes dans lequel la zone de déconnexion (9) consiste au moins en partie en un matériau présentant une mauvaise conduction par rapport au reste de l'élément de conduction (3).

11. Dispositif selon l'une des revendications 2 à 10 dans lequel on a prévu, sur la surface de la zone de déconnexion (9) contrôlable à l'aide de pression, une membrane (31) flexible assurant l'étanchéité de la chambre (5) ou de l'espace intérieur (27) du miroir d'excitation (23) en forme de creuset.

12. Dispositif selon l'une des revendications précédentes dans lequel on peut produire, grâce à la zone de déconnexion (9) au moins partiellement interrompue, un flux gazeux suite à l'activation du milieu (7) dans la chambre (5) du logement (1) ou dans l'espace intérieur (27) du miroir d'excitation (23) en forme de creuset et suite à la coupure d'au moins une zone partielle de la zone de déconnexion (9).

13. Dispositif permettant de couper un circuit électrique, en particulier pour de forts ampérages
a) avec un logement (1) dans lequel est prévu au moins un élément conducteur (3) qui présente une zone de déconnexion (9) et qu'on peut insérer dans un circuit électrique à couper de telle sorte que le trajet du courant à couper passe par l'élément conducteur (3) et
b) avec des milieux activables prévus dans ou sur le logement (1) destinés à produire une pression de déclenchement qui agit sur la zone de déconnexion (9)
c) où la zone de déconnexion (9) est formée de telle manière que, suite à une activation du milieu, la zone de déconnexion (9) est complètement interrompue ou coupée ou que la section transversale de la zone de déconnexion (9) est réduite,
**caractérisé en ce que**
d) les milieux activables contiennent un miroir d'excitation (39) composé d'un matériau de mémorisation, le miroir d'excitation (39) prenant en cas de dépassement d'une température seuil (activation) une forme enregistrée qui présente en direction oblique par rapport à l'élément de conduction (3) une plus grande étendue que la forme du miroir d'excitation (39) dans la position initiale à une température inférieure à la température seuil,
e) que le miroir d'excitation (39) s'appuie par une de ses extrémités sur une butée fixe par rapport au logement (1) et
f) que le miroir d'excitation (39) par son autre extrémité a un bon contact thermique avec l'élément de conduction (3) et/ou avec la zone de déconnexion (9),
g) où le miroir d'excitation (39) peut être activé par l'énergie thermique qui est dégagée par l'élément conducteur (3) ou par la zone de déconnexion (9) au cas où la température de l'élément conducteur (3) ou de la zone de déconnexion (9) dépasse une valeur prédéterminée.

14. Dispositif selon l'une des revendications précédentes dans lequel, en contrôlant la pression, on peut couper au moins une zone partielle de la zone de déconnexion (9) et dans lequel on a prévu à l'intérieur du logement (1) un espace de réception (19) destiné à accueillir la zone partielle coupée.

15. Dispositif selon la revendication 14 dans lequel l'espace de réception (19) a une géométrie telle ou dans lequel on a prévu dans l'espace de réception (19) des milieux tels que, suite à la déconnexion par le contrôle de la pression et à l'introduction par pression de la zone partielle dans l'espace de réception (19), on peut fixer la zone partielle dans une position éloignée de la zone de déconnexion (9) restante ou de l'élément de conduction (3) interrompu.

16. Dispositif selon la revendication 14 ou 15 dans lequel l'espace de réception (19) présente des ouvertures pour le dégagement d'un volume de gaz.
